# EUROPEAN PATENT APPLICATION

(11) **EP 4 350 933 A1**
(43) Date of publication of application: **10.04.2024**
(21) Application number: 22811204.1
(22) Date of filing: 17.05.2022
(51) Int. Cl.: H02J 7/00, G06Q 30/06, H02J 7/35, H02J 13/00

(54) **CHARGING STATION AND CHARGING SYSTEM**

(30) Priority: 24.05.2021 JP 2021087155
(71) Applicant: NTN Corporation, Osaka-shi, Osaka 530-0005 (JP)
(72) Inventor: ITO, Takashi, Kuwana-shi, Mie 511-0867 (JP)
(74) Representative: Maikowski & Ninnemann Patentanwälte Partnerschaft mbB
(86) International application number: PCT/JP2022/020558
(87) International publication number: WO 2022/249931

(57) **Abstract**

Provided is a charging station (1) which includes: a charger device (4) capable of charging a vehicle battery (3) of an electric vehicle (2); at least one power generator unit selected from a group consisting of a wind turbine generator unit (5), a photovoltaic generator unit (6), and a hydroelectric generator unit (19); a rechargeable battery (7) configured to store power generated by the power generator unit; a controller unit (8) configured to execute control so as to direct power generated by the power generator unit, via the charger device (3), into the rechargeable battery (7) and draw power accumulated in the rechargeable battery (7), via the charger device (3), into the vehicle battery (2); and a transportable structure (9) with rigidity and security configured to house the charger device (4), the rechargeable battery (7), and the controller unit (8) and shaped as a box including a gate configured to permit entry and exit of the electric vehicle (2).

## Description

### CROSS REFERENCE TO THE RELATED APPLICATION

This application is based on and claims Convention priority to Japanese patent application No. 2021-087155, filed May 24, 2021, the entire disclosure of which is herein incorporated by reference as a part of this application.

### BACKGROUND OF THE INVENTION

### (Field of the Invention)

The present invention relates to a charging station and a charging system that are capable of charging, for example, vehicle batteries of electric bikes or electrically assisted bicycles.

### (Description of Related Art)

Previously, a charging station for charging electrically assisted bicycles, etc. has been proposed (Patent Document 1). This charging station is installed outdoors and comes with a charger device to which a charging cable is connected to charge an electrically assisted bicycle with power that is delivered from a grid power system.

### [Related Document]

### [Patent Document]

[Patent Document 1] JP Laid-open Patent Publication No. 2006-158087

### SUMMARY OF THE INVENTION

The system in the prior art uses a charging station installed outdoors to charge an electrically assisted bicycle that is parked outdoors. Moreover, power supply for the charging comes from a grid power system.

A charging station which makes use of a power grid system can be installed in metropolitan areas to provide, for example, a rental service for electrically assisted bicycles. In contrast, the installation of a charging station would be challenging in areas where construction works for newly installing utility poles and power lines cannot be conducted - such as highland travel spots in the mountains or natural conservation areas - or in areas where there is no electricity available from a grid power system.

Further, construction works for installing the charging station itself take several days, thus adding to setup cost. In addition, since an electrically assisted bicycle needs to be parked and charged outdoors for extended hours, there is a risk for theft of and mischief on the electrically assisted bicycle or a charger device.

An object of the present invention is to provide a charging station and a charging system which are easy to install, excel in crime prevention, and are capable of charging a vehicle battery of an electric vehicle even at locations where there is no electricity available from a grid power system.

A charging station according to the present invention includes: a charger device capable of charging a vehicle battery, which is rechargeable, of an electric vehicle; at least one power generator unit selected from a group consisting of a wind turbine generator unit, a photovoltaic generator unit, and a hydroelectric generator unit; a rechargeable battery or storage battery configured to store power generated by the power generator unit; a controller unit configured to execute control so as to direct power generated by the power generator unit, via the charger device, into the rechargeable battery and draw power accumulated in the rechargeable battery, via the charger device, into the vehicle battery; and a structure, which is transportable, with rigidity and security configured to house the charger device, the rechargeable battery, and the controller unit and shaped as a box including a gate configured to permit entry and exit of the electric vehicle.

The electric vehicle can be an electric motorcycle, an electric motor tricycle, and an electrically assisted bicycle.

According to this configuration, the vehicle battery of the electric vehicle can be charged with power generated by at least one power generator unit selected from a group consisting of a wind turbine generator unit, a photovoltaic generator unit, and a hydroelectric generator unit - namely, so-called natural energy generator unit(s). Thus, the vehicle battery of the electric vehicle can be charged even at locations where there is no electricity available from a grid power system. Further, the setup cost in areas where there is no electricity available and where it is, therefore, difficult to secure power supply can be reduced thanks to the use of the natural energy generator unit(s) - thus, obviating the need to conduct construction works for newly installing utility poles and power lines - and thanks to the fact that the structure is transportable. For these reasons, the charging station having the above configuration can be more readily installed than previous charging stations that make use of a grid power system. The structure is shaped as a box including a gate configured to permit entry and exit of the electric vehicle and comes with rigidity and security. Therefore, by keeping the electric vehicle, the charger device, and others inside, the structure can mitigate theft of and mischief on these electric vehicle, charger device, and others, thereby exceling in crime prevention.

The structure may comprise a shipping container. In this case, the structure can be transferred using a variety of transport means such as truck, railroad, ship, and airplane. With an excellent rigidity, the shipping container can protect devices and others stored therein from possible malfunctions that may be caused by vibrations and impacts during a transport process.

A charging system according to the present invention includes: more than one charging station having one of the abovementioned configurations in accordance with the present invention; and a communication system configured to present an operation status of the more than one charging station to a customer who is a user of the electric vehicle.

The operation status includes information on the utilization rate, the opening hours, and/or others of the more than one charging station, and/or information on the SoC status including, for example, whether the rechargeable battery located at each charging station is fully charged or not.

The above configuration enhances the usability experienced by a customer who is a user of the electric vehicle.

Any combinations of at least two features disclosed in the claims and/or the specification and/or the drawings should also be construed as encompassed by the present invention. Especially, any combinations of two or more of the claims should also be construed as encompassed by the present invention.

### BRIEF DESCRIPTION OF THE DRAWINGS

The present invention will be more clearly understood from the following description of preferred embodiments made by referring to the accompanying drawings. However, the embodiments and the drawings are given merely for the purpose of illustration and explanation, and should not be used to delimit the scope of the present invention, which scope is to be delimited by the appended claims. In the accompanying drawings, alike symbols indicate alike or corresponding parts throughout the different figures, and:
Fig. 1 is a block diagram of the configuration of a control system for a charging system with more than one charging station, in accordance with an embodiment of the present invention;
Fig. 2 shows a perspective view of the charging station;
Fig. 3 shows a front elevational view of the charging station in an open position of a door;
Fig. 4A shows a set of perspective views illustrating an example method for installing the charging station;
Fig. 4B shows a horizontal cross sectional view of the charging station in a closed position of the door;
Fig. 5 shows a horizontal cross sectional view of the charging station, schematically illustrating an example use scenario in which an electric vehicle may be charged;
Fig. 6 shows a horizontal cross sectional view of the charging station, schematically illustrating another example use scenario in which an electric vehicle may be charged;
Fig. 7 shows a horizontal cross sectional view of the charging station, schematically illustrating yet another example use scenario in which an electric vehicle may be charged;
Fig. 8 shows a horizontal cross sectional view of the charging station, schematically illustrating yet another example use scenario in which an electric vehicle may be charged;
Fig. 9A shows a horizontal cross sectional view of a charging station in a closed position of a door, in accordance with another embodiment of the present invention;
Fig. 9B shows a top plan view of the charging station in an open position of the door; and
Fig. 9C shows a front elevational view of the charging station in an open position of the door.

### DESCRIPTION OF EMBODIMENTS

### [First Embodiment]

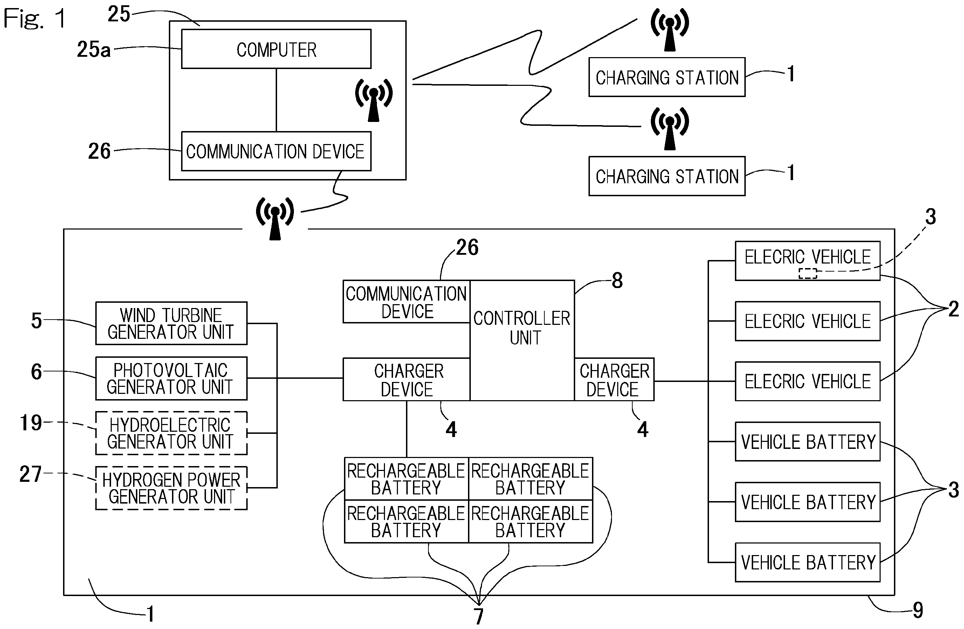

Embodiments of the present invention will be described in connection with Figs. 1 to 8.

As illustrated in Fig. 1, in an embodiment, a charging station 1 includes a charger device 4 capable of charging a vehicle battery 3 of an electric vehicle 2. For example, each electric vehicle 2 is an electric motorcycle, an electric motor tricycle, or an electrically assisted bicycle. Each electric vehicle 2 includes a vehicle battery 3 and a motor (not shown) driven with power supplied from the vehicle battery 3 to provide traction. Each electric vehicle 2 in the instant example can be rented out, for a selected duration of time or for a selected term period, to a customer who has entered into an agreement regarding the use of the electric vehicle 2.

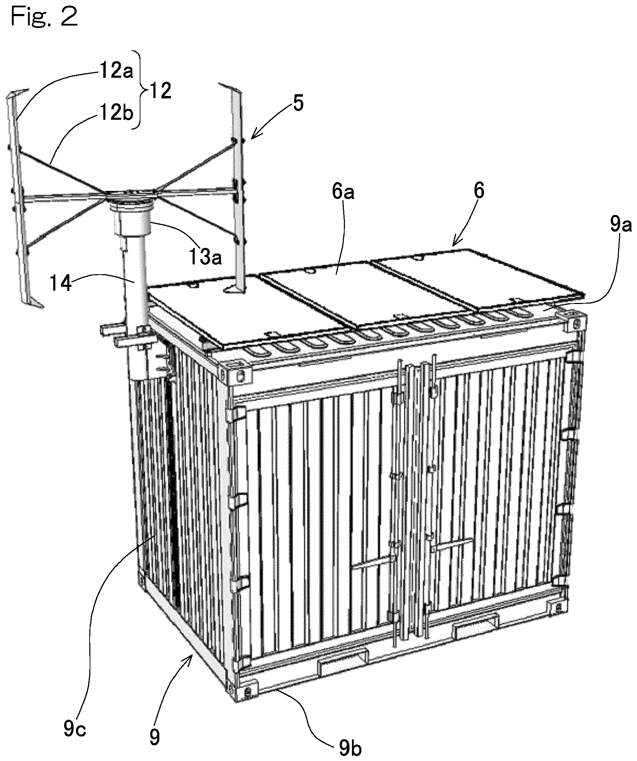

In addition to the charger device 4, the charging station 1 includes a wind turbine generator unit 5, a photovoltaic generator unit 6, a rechargeable battery 7, a controller unit 8, and a structure 9 which is shown in Fig. 2.

### <Structure 9>

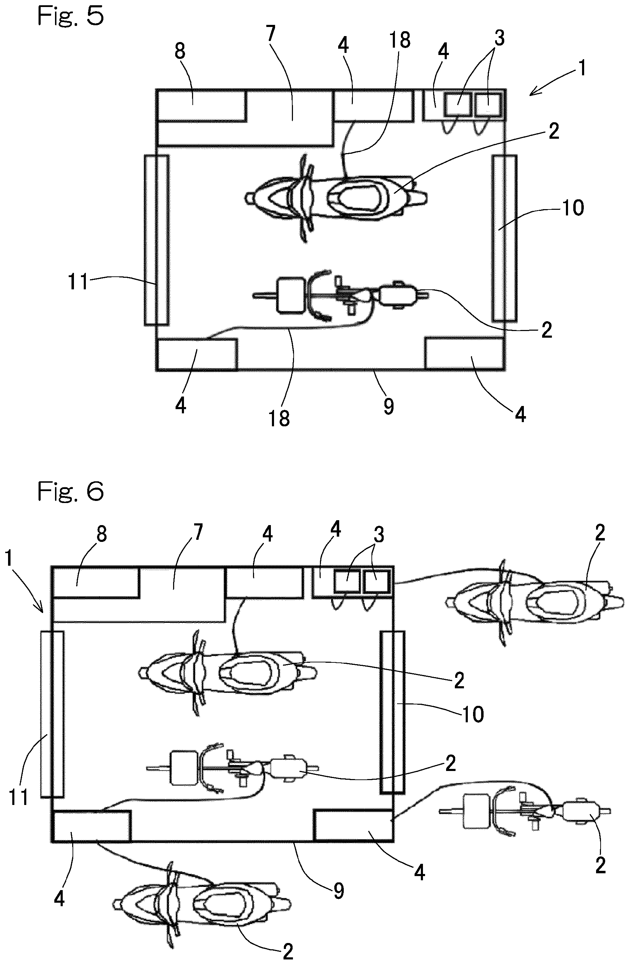

As illustrated in Fig. 5, the structure 9 houses the charger device 4, the rechargeable battery 7, the controller unit 8, and more than one electric vehicle 2. Further, the structure 9 is transportable, is shaped as a box including double door-type gates 10, 11 configured to permit entry and exit of the electric vehicle 2, and comes with rigidity and security. The gates 10, 11 are configured to be able to be locked by a person having a permission. For instance, the person having a permission includes a customer. As illustrated in Fig. 2, the structure 9 includes a top wall 9a and a bottom wall 9b that are substantially rectangular in shape, and four perimeter walls 9c arranged between the top wall 9a and the bottom wall 9b, thereby forming a generally cuboid shape as a whole. In particular, the structure 9 comprises a shipping container.

The "shipping container" used herein is preferably a container having a size that complies with a standard for freight transport containers - such as a domestic standard for container transport. For instance, the "standard" in this context may be a standard established by a relevant domestic administrative agency or an international organization such as the International Organization for Standardization (ISO), or may even be a JR container which serves as a de-facto standard for railroad freight transport containers in Japan.

Being configured as a shipping container, the structure 9 can be transferred using a variety of transport means such as truck, railroad, ship, or airplane. With an excellent rigidity, the shipping container can also protect devices and others stored therein from possible malfunctions that may be caused by vibrations and impacts during a transport process.

### <Wind Turbine Generator unit 5>

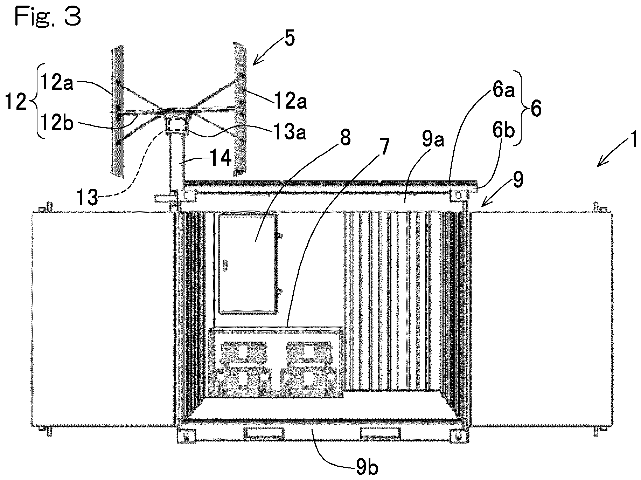

As illustrated in Fig. 3, the wind turbine generator unit 5 includes a wind turbine 12 and a generator 13 configured to be driven by the wind turbine 12 to generate power. The wind turbine 12 is configured as a vertical axis wind turbine. In particular, the wind turbine 12 includes a plurality of blades 12a (or two blades 12a in the instant example) and a blade support 12b providing support for the blades 12a. Each of the blades 12a extends in a vertical direction, whereas the blade support 12b is rotatably supported about a vertical axis on an upper end of a tower 14 by means of a bearing arrangement (not shown). The two blades 12a are positioned to be angularly offset from each other by 180 degrees about an axis of the tower 14. Further, the tower 14 is secured centrally to an upper part of one of the perimeter walls 9c of the structure 9 (Fig. 2).

The generator 13 of the wind turbine generator unit 5 is disposed inside a generator casing 13a that is mounted to the top of the tower 14. Stationary race(s) of the bearing arrangement is/are fitted to the generator casing 13a, whereas rotational race(s) of the bearing arrangement is/are coupled to the blade support 12b. The generator 13 generates power as a rotor of the generator 13 rotates inside the generator casing 13a along with the rotational race(s) in response to the rotation of the wind turbine 12. For example, an induction generator or a synchronous generator can be used for the generator 13.

A vertical axis wind turbine can be configured in a relatively small size but still can receive wind to generate power and is, therefore, suited as the wind turbine 12 for the wind turbine generator unit 5 to be installed to the transportable structure 9. Nevertheless, the wind turbine may alternatively be a horizontal axis wind turbine.

### <Photovoltaic Generator Unit 6>

The photovoltaic generator unit 6 includes a solar panel 6a configured to receive sunlight for photoelectric conversion and a panel mount 6b attaching the solar panel 6a to the structure 9. In the instant example, the solar panel 6a is attached onto the top wall 9a of the structure 9 by means of the panel mount 6b. Depending on the direction of solar radiation or the installation environment, the solar panel 6a may alternatively be disposed on given one(s) of the perimeter walls 9c (Fig. 2) of the structure 9 or deployed around the structure 9. It should also be noted that the panel mount 6b in the illustrated example may be equipped with a mechanism capable of changing the angle of the solar panel 6a according to the direction of the sun.

### <Control System and Others>

As illustrated in Fig. 1, the rechargeable battery 7 stores power generated by the wind turbine generator unit 5 and the photovoltaic generator unit 6 and delivers the stored power to the vehicle battery 3 when demanded to do so. The controller unit 8 is configured to execute control so as to direct power generated by these power generator units 5, 6, via the charger device 4, into the rechargeable battery 7 and draw power accumulated in the rechargeable battery 7, via the charger device 4, into the vehicle battery 3. For instance, the controller unit 8 includes an AC to DC converter or the like configured to convert the AC power generated by the power generator units 5, 6 to a voltage that can be used to charge the rechargeable battery 7.

The amount of power which can be generated by natural energy generator unit(s) like the wind turbine generator unit 5 and the photovoltaic generator unit 6 and which can be stored in the rechargeable battery 7 are under the constraints of the power generating performance of the natural energy generator unit(s) and the operational regulations in effect, thus, limiting the capacity of the rechargeable battery 7. For this reason, the controller unit 8 can controllably charge the vehicle battery 3 of more than one electric vehicle 2 without bringing about a reduction in the capacity or service life of the rechargeable battery 7.

### installation Method for Charging Station 1>

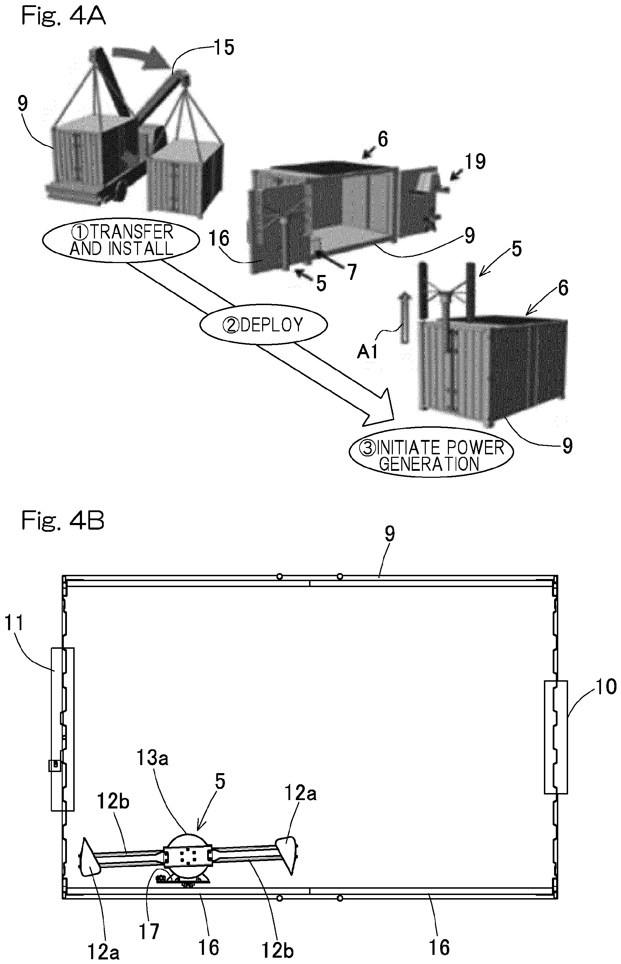

As illustrated in Fig. 4A, firstly, the structure 9 housing the wind turbine generator unit 5, the photovoltaic generator unit 6, the charger device 4 (Fig. 1), the rechargeable battery 7, the controller unit 8 (Fig. 3) and the like is transported to a desired installation site by, for example, a truck loader crane (or a truck-mounted crane). Then, the structure 9 is unloaded by a crane 15 of the truck-mounted crane. Alternatively, a forklift, a gantry crane (both not shown), etc. may be used to unload the structure 9 from a corresponding one of various possible transport means. It should also be noted that the structure 9 may be transported with electric vehicle(s) accommodated inside in addition to the power generator units and others. At least one of the wind turbine generator unit 5, the photovoltaic generator unit 6, the charger device 4 (Fig. 1), and the rechargeable battery 7 may be transported separately from the structure 9.

Subsequently, the wind turbine generator unit 5 and the photovoltaic generator unit 6 housed in the structure 9 are deployed out of the container, in order for these power generator units 5, 6 to be mounted to desired locations on the structure 9. In the instant example, a door 16 on a front side of the structure 9 is equipped with a wind turbine holder 17 configured to hold the wind turbine generator unit 5, which is stored in the structure 9, along the interior side of the door 16, as shown in Fig. 4B.

Thanks to the wind turbine holder 17 equipped on the door 16, the wind turbine generator unit 5, which is held along the interior side of the door 16 and positioned outside of the container by opening the door 16, can be simply raised upwards and installed as indicated with an arrow A1 without the use of a ramp, etc., as shown in Fig. 4A, in order to be mounted to a desired location. Then, each of the power generator units 5, 6 is ready to initiate power generation.

### <1st Use Scenario>

Fig. 5 shows an example of the charging station 1 in which the structure 9 is embodied as a 10-foot container where the electric vehicle 2 may be charged. The structure 9 is provided with one of the gates 10 at one of the lateral faces of the structure 9 to permit entry of the electric vehicle 2 and provided with the other of the gates 11 at another one of the lateral faces of the structure 9 that is opposite thereto to permit exit of the electric vehicle 2. For instance, a customer for or a manager of the charging station 1 uses a charging cable 18, etc. to establish an electrical connection between the charger device 4 and the vehicle battery of the electric vehicle 2, which has entered the structure 9, to charge the vehicle battery.

During this process, the controller unit 8 executes control so as to draw power accumulated in the rechargeable battery 7, via the charger device 4, into the vehicle battery. The controller unit 8 can even charge, via the charger device 4, an individual vehicle battery 3 separated from the electric vehicle 2 with power that is accumulated in the rechargeable battery 7. A customer who is a user of the electric vehicle 2 can let the electric vehicle 2 exit through the gate 11 once the vehicle battery has been charged, and can start using the electric vehicle 2.

### <2nd Use Scenario>

As illustrated in Fig. 6, the vehicle battery of the electric vehicle 2 can not only be charged inside the container but can also be charged when the electric vehicle 2 is parked outside the container. In this case, the vehicle battery of the electric vehicle 2 can be charged outside the container when, for example, there is not enough space for the electric vehicle 2 to enter the container, thereby enhancing the usability experienced by a customer.

### <3rd Use Scenario>

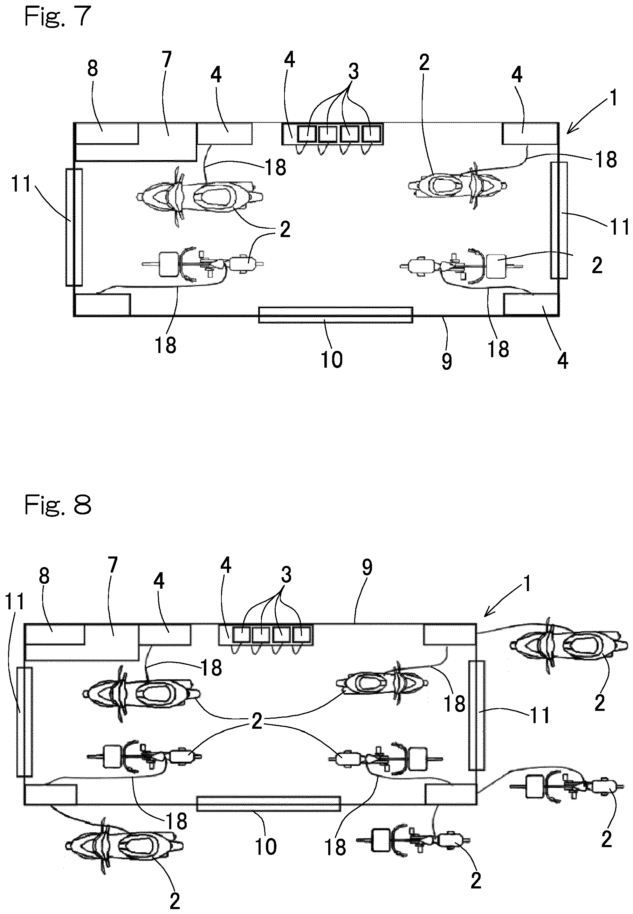

Figs. 7 and 8 show examples of the charging station 1 in which the structure 9 is embodied as a 20-foot container where the electric vehicle 2 may be charged. The vehicle battery of the electric vehicle 2 can be charged inside the container, as shown in Fig. 7. Or, the vehicle battery of the electric vehicle 2, whether inside or outside the container, can be charged, as shown in Fig. 8.

### <Benefits and Effects>

According to the charging station 1 that has been discussed thus far, the vehicle battery 3 of the electric vehicle 2 can be charged with power generated by natural energy generator unit(s) in the form of the wind turbine generator unit 5 and the photovoltaic generator unit 6 as in Fig. 1. Thus, the vehicle battery 3 of the electric vehicle 2 can be charged even at locations where there is no electricity available from a grid power system. Further, the setup cost in areas where there is no electricity available and where it is, therefore, difficult to secure power supply can be reduced thanks to the use of the natural energy generator unit(s) - thus, obviating the need to conduct construction works for newly installing utility poles and power lines - and thanks to the fact that the structure 9 is transportable. Since a shipping container containing the power generator units 5, 6, the charger device 4, the rechargeable battery 7, and the controller unit 8 in a single package is used for installation, it is possible to prepare a charging station 1 in an easier setup procedure and at a lower cost than by constructing the building of the station from scratch.

For these reasons, the charging station 1 having the above configuration can be more readily installed than previous charging stations that make use of a grid power system.

The structure 9 is shaped as a box including the gates 10, 11 configured to permit entry and exit of the electric vehicle 2 as in Fig. 5 and comes with rigidity and security. Therefore, by keeping the electric vehicle 2, the charger device, or others inside, the structure 9 can mitigate theft of and mischief on these electric vehicle 2, charger device, and others, thereby exceling in crime prevention.

Since the charging station 1 is equipped with more than one natural energy generator unit including the wind turbine generator unit 5 and the photovoltaic generator unit 6 as in Fig. 1, the amount of power that can be generated is insensitive to constrains including weather conditions, a natural environment such as a terrain, and daytime versus nighttime, thus, allowing for power to be accumulated efficiently in the rechargeable battery 7. Hence, a vast range of locations can be chosen as a site to install and operate the charging station 1.

### <Further Embodiments>

Now, additional embodiments will be described. In the remainder of the discussion, features corresponding to those previously discussed features with respect to preceding embodiment(s) will be indicated with the same reference symbols and will not be described again to avoid redundancy. Where only a subset of features are discussed, the remaining features should be regarded as analogous to those of the preceding embodiment(s) unless otherwise noted. Identical features produce identical benefits and effects. In addition to particular combinations of features discussed with respect to each of the embodiments, the embodiments themselves can be partially combined with each other, unless such combinations are found to be inoperable.

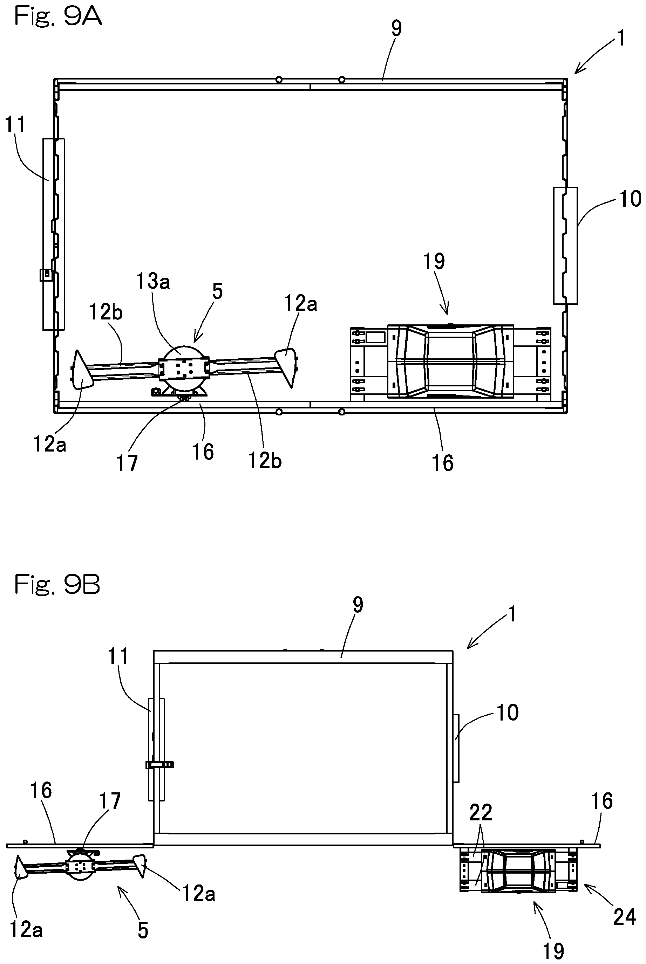

### [Second Embodiment: Figs. 9A to 9C]

### <Hydroelectric generator unit 19>

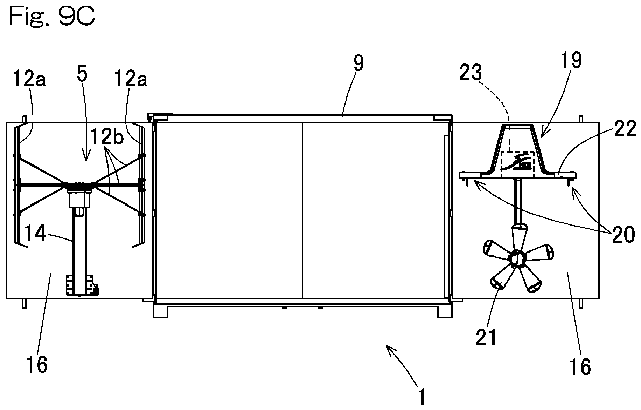

As illustrated in Fig. 9A, the charging station 1 may include a hydroelectric generator unit 19 configured to be able to be installed to a waterway and configured to be able to be housed in and taken out of the structure 9 as shown in Fig. 9B. For example, the hydroelectric generator unit 19 includes a base 20 configured to be installed to the waterway, a hydroelectric turbine 21, and a frame 22 carrying the hydroelectric turbine 21, and a generator 23 supported by the frame 22 and configured to generate power from rotation of the hydroelectric turbine 21, as shown in Fig. 9C.

In the instant example, the door 16 on a front side of the structure 9 is equipped with a hydroelectric turbine holder 24 configured to hold the hydroelectric turbine generator unit 19, which is stored in the structure 9, along the interior side of the door 16. Thanks to the hydroelectric turbine holder 24 equipped on the door 16, the hydroelectric generator unit 19, which is held along the interior side of the door 16 and positioned outside of the container by opening the door 16, can be loaded on a wagon, etc. without the use of a ramp, etc., in order to be transferred to a desired installation site.

Since such a charging station is equipped with the wind turbine generator unit 5, the photovoltaic generator unit 6 (Fig. 1), and the hydroelectric generator unit 19, it is possible to effectively exploit natural energy in an adaptive manner to the surrounding environment of the installation site of the charging station 1. In addition, more than one type of natural energy power generation may be combined, thus, allowing for power accumulation that adapts to changes in the weather. Otherwise, the benefits and effects analogous to those of the preceding embodiment(s) are achieved.

### <Charging System>

As illustrated in Fig. 1, the charging system includes more than one charging station 1 according to a given one of the embodiments and a communication system configured to present an operation status of these charging stations 1 to a customer who is a user of the electric vehicle 2. For instance, the communication system includes a server 25 and a communication device 26 provided in each of the charging stations 1 and the server 25.

The controller unit 8 in each of the charging stations 1 communicates, via the communication device 26 to the server 25, an operation status including information on, for example, whether a charger device 4 is currently available or not, the number of such charger devices, and whether a vehicle battery 3 present at each charging station 1 has been fully charged or not. A computer 25a of the server 25 logs the received operation status in an overwritable manner. The received operation status is presented to a customer over a network. For example, the customer can use a mobile device such as a smartphone to access the server 25 over a network and view the operation status of a charging station 1 which he/she considers using. Hence, the usability experienced by a customer who is a user of the electric vehicle 2 is enhanced.

The charging station 1 may include a hydrogen power generator unit 27 for a natural energy generator unit. In the hydrogen power generator unit 27, for example, introduced air is compressed by a compressor and delivered to a combustor unit into which hydrogen is injected for combustion, producing high temperature, high pressure combustion gas that actuates a turbine. The turbine creates power to drive a generator.

Power generator units may be combined as needed from among the aforementioned plurality of types of power generator units, so that one or more power generator units from among the plurality of types of power generator units can be utilized.

The charging station can even be used as a rental garage in which a customer can store, for example, an electric vehicle that he/she owns.

The charging station can also be used as a base camp for a disaster relief operation. Disaster relief workers and disaster victims can use power generated by the natural energy generator unit(s) to operate necessity electronics, mobile devices, etc.

The charging station may provide more than one electric vehicle for use as means of transportation in depopulated areas.

As an alternative to the shipping container, the structure may comprise a simple transportable building.

The controller unit may include an inverter, etc., configured to convert power accumulated in the rechargeable battery to AC power having a sinusoidal waveform similar to that of the power mains or AC power having a square waveform.

The charging station can even include a grid power system interface configured to receive power supply from a grid power system. For example, by installing such a charging station with the grid power system interface on a location where it can connect to a grid power system, the grid power system can be utilized as a main power source while utilizing the charging station as a backup power source in the event of power outage.

### <Proposed Reference Example>

The charging station may even charge not only the vehicle battery of the electric vehicle but also a vehicle battery of a gasoline engine-powered motorcycle or motor tricycle (which will hereinafter be referred to collectively as an "engine-powered vehicle"). In this case, an engine-powered vehicle with an exhausted or deteriorated vehicle battery can be readily rescued at the charging station or near the charging station.

A charging station in accordance with this proposed reference example includes: a charger device capable of charging at least one of a vehicle battery of an electric vehicle or a vehicle battery of an engine-powered vehicle; at least one power generator unit selected from a group consisting of a wind turbine generator unit, a photovoltaic generator unit, and a hydroelectric generator unit; a rechargeable battery configured to store power generated by the power generator unit; a controller unit configured to execute control so as to direct power generated by the power generator unit, via the charger device, into the rechargeable battery and draw power accumulated in the rechargeable battery, via the charger device, into the vehicle battery; and a structure, which is transportable, with rigidity and security configured to house the charger device, the rechargeable battery, and the controller unit and shaped as a box including a gate configured to permit entry and exit of the electric vehicle or the engine-powered vehicle.

While preferred embodiments have thus been discussed with reference to the drawings, various additions, modifications, or omissions can be made therein without departing from the principle of the present invention and are, thus, also encompassed within the scope of the present invention.

### (Reference Symbols)

- 1: charging station
- 2: electric vehicle
- 3: vehicle battery
- 4: charger device
- 5: wind turbine generator unit
- 6: photovoltaic generator unit
- 7: rechargeable battery
- 8: controller unit
- 9: structure
- 10, 11: gate

## Claims

1. A charging station comprising:
a charger device capable of charging a vehicle battery of an electric vehicle;
at least one power generator unit selected from a group consisting of a wind turbine generator unit, a photovoltaic generator unit, and a hydroelectric generator unit;
a rechargeable battery configured to store power generated by the power generator unit;
a controller unit configured to execute control so as to direct power generated by the power generator unit, via the charger device, into the rechargeable battery and draw power accumulated in the rechargeable battery, via the charger device, into the vehicle battery; and
a structure, which is transportable, with rigidity and security, the structure being configured to house the charger device, the rechargeable battery, and the controller unit and shaped as a box including a gate configured to permit entry and exit of the electric vehicle.

2. The charging station as claimed in claim 1, wherein the structure comprises a shipping container.

3. A charging system comprising:
more than one charging station as claimed in claim 1 or 2; and
a communication system configured to present an operation status of said more than one charging station to a customer who is a user of the electric vehicle.
